# EUROPEAN PATENT SPECIFICATION

(11) **EP 3 321 581 B1**
(45) Date of publication and mention of the grant of the patent: **22.04.2020**
(21) Application number: 17199683.8
(22) Date of filing: 02.11.2017
(51) Int. Cl.: F23K 5/14, F23K 5/20, F23R 3/34

(54) **COMBUSTOR WITH AUTO-THERMAL VALVE FOR PASSIVELY CONTROLLING FUEL FLOW TO AXIAL FUEL STAGE OF GAS TURBINE**
BRENNKAMMER MIT AUTOTHERMISCHEM VENTIL ZUR PASSIVEN STEUERUNG DES BRENNSTOFFFLUSSES IN DIE AXIALE BRENNSTOFFSTUFE EINER GASTURBINE
CHAMBER DE COMBUSTION AVEC SOUPAPE AUTO-THERMIQUE POUR LE CONTRÔLE PASSIF DU FLUX DE CARBURANT VERS L'ÉTAGE DE CARBURANT AXIAL D'UNE TURBINE À GAZ

(30) Priority: 15.11.2016 US 201615351856
(43) Date of publication of application: 16.05.2018
(73) Proprietor: General Electric Company, Schenectady, NY 12345 (US)
(72) Inventor: WIDENER, Stanley Kevin, Greenville, SC South Carolina 29615 (US); MIRANDA, Carlos Miguel, Greenville, SC South Carolina 29615 (US)
(74) Representative: BRP Renaud & Partner mbB Rechtsanwälte Patentanwälte Steuerberater

(56) References cited:
- EP-A1- 0 672 220
- EP-A2- 1 329 617
- EP-A2- 2 204 563
- EP-A2- 2 511 499
- EP-A2- 2 644 864
- US-A- 3 779 007

## Description

### BACKGROUND OF THE INVENTION

The disclosure relates generally to gas turbines, and more specifically, to an auto-thermal valve for passively controlling fuel flow to an axial fuel stage (e.g., late lean injection) of a gas turbine.

Gas turbines typically include a compressor, a combustor section including one or more combustors, and at least one turbine section. Compressor discharge air is channeled into each combustor where fuel is injected, mixed, and burned. The combustion gases are then channeled to the turbine section which extracts energy from the combustion gases. Gas turbine manufacturers are currently involved in research and engineering programs to produce gas turbines that will operate at high efficiency without producing undesirable air polluting emissions. The primary air polluting emissions usually produced by gas turbines burning conventional hydrocarbon fuels include oxides of nitrogen (NOx), carbon monoxide (CO), and unburned hydrocarbons.

Lean premixed combustion of fuel and air in a primary reaction zone of a combustor is widely used throughout the gas turbine industry as a method of reducing air pollutant levels, in particular thermal NOx emissions levels. Lean direct injection of hydrocarbon fuel and air via an axial fuel stage into a secondary reaction zone of a combustor, downstream from the primary reaction zone, has also been shown to be an effective method for reducing NOx emission levels for gas turbines. EP 2 644 864 discloses a combustor for a gas turbine including a system for providing fuel to primary and secondary fuel nozzles in a gas turbine engine fuel system. Fuel is routed to a primary fuel nozzle. A valve is provided to maintain the fuel backpressure. The valve is progressively opened under increasing fuel flow to route secondary fuel from the overall fuel flow to secondary fuel nozzles, which may be considered an equivalent to an axial fuel stage.

### BRIEF DESCRIPTION OF THE INVENTION

The invention provides a combustor for a gas turbine, comprising: an axial fuel stage fuel injector; and a passively-actuated valve for selectively directing a supply of fuel to the axial fuel stage fuel injector based on a characteristic of the fuel; characterized in that: the passively-actuated valve comprises a thermally-actuated valve, and the characteristic of the fuel comprises a temperature of the fuel.

The invention also provides a turbine system, including: a compressor; a combustor as described above and a turbine.

The invention further provides a method, comprising: controlling a temperature of fuel in a combustor of a gas turbine; and actuating a passive, thermally-actuated valve in the combustor, based on the temperature of the fuel, to inject fuel into an axial fuel stage of the combustor.

The illustrative aspects of the present disclosure are designed to solve the problems herein described and/or other problems not discussed.

### BRIEF DESCRIPTION OF THE DRAWINGS

These and other features of this disclosure will be more readily understood from the following detailed description of the various aspects of the disclosure taken in conjunction with the accompanying drawings that depicts various embodiments of the disclosure. In the drawings, like numerals refer to like elements.
FIG. 1 is a schematic diagram of a combined cycle gas power generation system according to embodiments.
FIG. 2 is a cross-sectional illustration of a combustor section of a gas turbine system according to embodiments.
FIG. 3 is partial enlarged cross-sectional view of the head end area of the combustor of FIG. 2 with an auto-thermal valve in a closed state according to embodiments.
FIG. 4 is partial enlarged cross-sectional view of the head end area of the combustor of FIG. 2 with the auto-thermal valve in an open state according to embodiments.
FIG. 5 is a chart depicting fuel temperature versus fuel flow through an auto-thermal valve according to embodiments.
FIG. 6 depicts an auto-thermal valve in a closed configuration according to embodiments.
FIG. 7 depicts the auto-thermal valve of FIG. 6 in an open configuration according to embodiments.
FIG. 8 depicts the auto-thermal valve of FIG. 6 in a fully open configuration according to embodiments.

It is noted that the drawings of the disclosure are not necessarily to scale. The drawings are intended to depict only typical aspects of the disclosure, and therefore should not be considered as limiting the scope of the disclosure. In the drawings, like numbering represents like elements between the drawings.

### DETAILED DESCRIPTION OF THE INVENTION

The disclosure relates generally to gas turbines, and more specifically, to an auto-thermal valve for passively controlling fuel flow to an axial fuel stage (e.g., late lean injection) of a gas turbine.

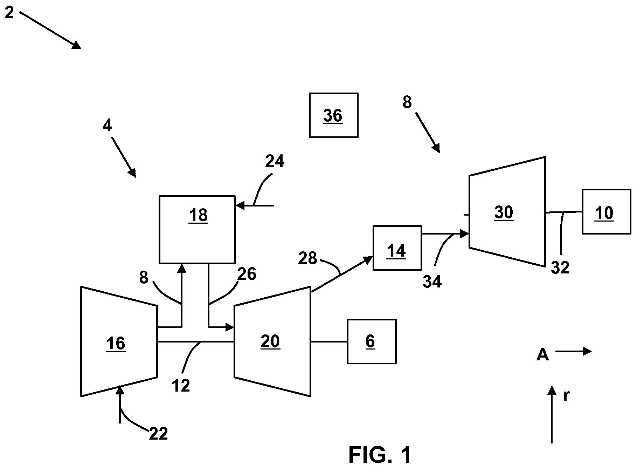

In the Figures, for example as shown in FIG. 1, the "A" axis represents an axial orientation. As used herein, the terms "axial" and/or "axially" refer to the relative position/direction of objects along axis A, which is substantially parallel with the axis of rotation of the turbomachine (in particular, the rotor section). As further used herein, the terms "radial" and/or "radially" refer to the relative position/direction of objects along an axis (r), which is substantially perpendicular with axis A and intersects axis A at only one location. Additionally, the terms "circumferential" and/or "circumferentially" refer to the relative position/direction of objects along a circumference (c) which surrounds axis A but does not intersect the axis A at any location. In the description, a set of elements includes one or more elements.

Turning to FIG. 1, a schematic view of portions of an illustrative combined cycle power generating system 2 is shown. The combined cycle power generating system 2 includes a gas turbine system 4 operably connected to a generator 6, and a steam turbine system 8 operably coupled to another generator 10. The generator 6 and the gas turbine system 4 may be mechanically coupled by a shaft 12. Also shown in FIG. 1 is a heat exchanger 14 operably connected to the gas turbine system 4 and the steam turbine system 8. The heat exchanger 14 may be fluidly connected to both the gas turbine system 4 and the steam turbine system 8 via conventional conduits (numbering omitted).

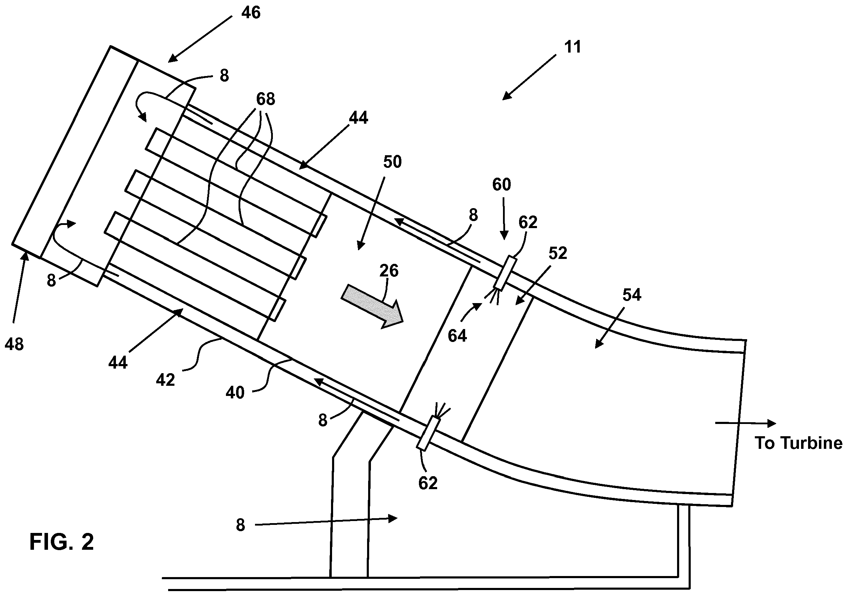

The gas turbine system 4 includes a compressor system 16 and a combustor system 18. The gas turbine system 4 also includes a gas turbine 20 coupled to the shaft 12. In operation, air 22 enters an inlet of the compressor system 16, is compressed, and then discharged to the combustor system 18 where a supply of fuel 24 is burned to provide hot, high energy combustion gases 26, which drive the gas turbine 20. Typically, the combustor system 18 includes a circular array of circumferentially spaced combustors 11 (FIG. 2), each combustor including at least one fuel nozzle for injecting fuel into a combustion area. In the gas turbine 20, the energy of the hot gases is converted into work, some of which is used to drive the compressor system 16 through the rotating shaft 12, with the remainder available for useful work to drive a load such as the generator 6 via the shaft 12 for producing electricity. In the present disclosure, only one combustor 11 is illustrated, it being appreciated that other combustors in the gas turbine system 4 are substantially similar to the illustrated combustor 11.

FIG. 1 also represents the combined cycle in a simple form in which the energy in the hot exhaust gases 28 exiting the gas turbine 20 is converted into additional useful work. The exhaust gases 28 enter the heat exchanger 14 in which water is converted to steam 34. The steam turbine system 8 may include one or more steam turbines 30 (only one is shown), e.g., a high pressure (HP) turbine, an intermediate pressure (IP) turbine, and a low pressure (LP) turbine, each of which are coupled to a shaft 32. The steam turbine 30 includes a plurality of rotating blades (not shown) mechanically coupled to the shaft 32. In operation, steam 34 from the heat exchanger 14 enters an inlet of the steam turbine 30 and is channeled to impart a force on the blades of the steam turbine 30 causing the shaft 32 to rotate. The rotating shaft 32 may be coupled to the generator 10 to produce additional electric power. The fuel 24 may be heated (e.g., to increase the efficiency of the gas turbine system 4) using, for example, hot water and/or steam generated in the heat exchanger 14, using a fuel heater, and/or in any other suitable manner. A fuel control system 36 operably coupled to the gas turbine system 4 and the steam turbine system 8 monitors and regulates the temperature of the fuel 24.

According to embodiments, at least one passive, auto-thermal valve sensitive to fuel temperature is provided for selectively directing fuel to a set of axial fuel stage (AFS) fuel injectors (e.g., late lean fuel injectors) of a combustor of a gas turbine system. An auto-thermal valve may be located, for example, within a fuel passage in an end cover of the combustor. The fuel may include, for example, premixed fuels (e.g., PM2, PM3) used in a DLN2.6+ combustor (General Electric).

The auto-thermal valve is configured to be closed at fuel temperatures below a temperature set point and open at fuel temperatures above the temperature set point. When the auto-thermal valve is closed, fuel is prevented from flowing to the AFS fuel injectors. When the auto-thermal valve is open, fuel is allowed to flow to the set of the AFS fuel injectors.

The auto-thermal valve is responsive to fuel temperature, which may be controlled, for example, by the above-described fuel control system 36. In embodiments, the fuel control system 36 controls the fuel temperature between an ambient fuel temperature and a target fuel temperature. An intermediate fuel temperature is set between the ambient fuel temperature and the target fuel temperature. The auto-thermal valve is configured such that its temperature set point is equal to the intermediate fuel temperature.

At and below the intermediate fuel temperature, the auto-thermal valve is closed, and no fuel flows to AFS fuel injectors. When the gas turbine reaches a desired level of output, the fuel control system 36 increases the fuel temperature towards the target temperature. The auto-thermal valve begins to open at a fuel temperature above the intermediate fuel temperature. When the target temperature is reached, the auto-thermal valve is fully open, and a full flow of fuel is supplied to the AFS fuel injectors.

FIG. 2 depicts a simplified cross-sectional illustration of a combustor 11 of a gas turbine system 2 according to embodiments.

The combustor 11 of the gas turbine system 2 includes a combustor chamber 40 enclosed within a compressor discharge casing 42. Generally described, the volume 44 located between the combustor chamber 40 and the compressor discharge casing 42 receives a flow of compressed air 8 discharged from the compressor section 4. The flow of compressed air 8 passes through the volume 44 toward a head end 46 of the combustor 11, which is closed by an end cover assembly 48.

The combustor chamber 40 further includes a primary reaction zone 50 in which fuel introduced by a set of fuel injectors 68 is mixed with the compressed air 8. The fuel/air mixture is ignited and burned within the primary reaction zone 50 to generate a flow of hot combustion gases 26. The hot combustion gases 26 pass into and through a secondary reaction zone 52 and a transition duct 54 to the turbine section 16. In the turbine section 16, the hot combustion gases 26 may be used, for example, to drive a rotor shaft (e.g., shaft 12, FIG. 1) to produce power.

During some operating stages of the combustor 11 of the gas turbine system 4, additional fuel may be injected into the secondary reaction zone 52, which is located downstream of the primary reaction zone 50. In general, in axial staging, the primary reaction zone is designed for optimum performance (and low emissions) at low power. When more power is required, fuel may be injected into one or more reaction zones downstream of the primary reaction zone.

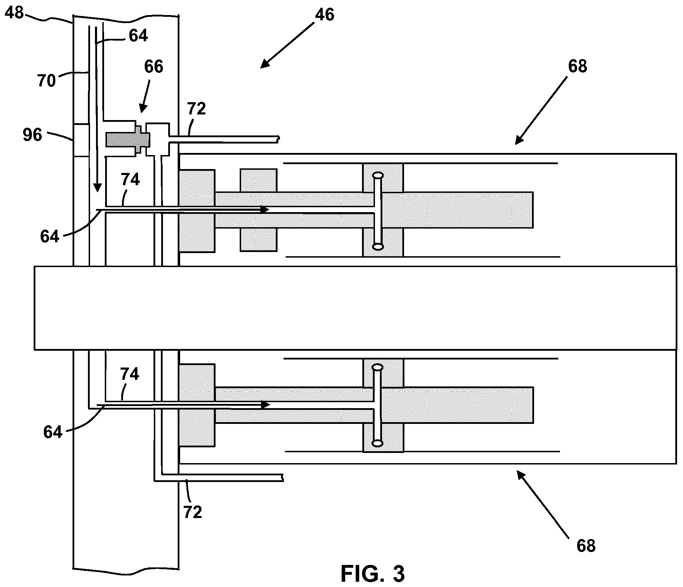

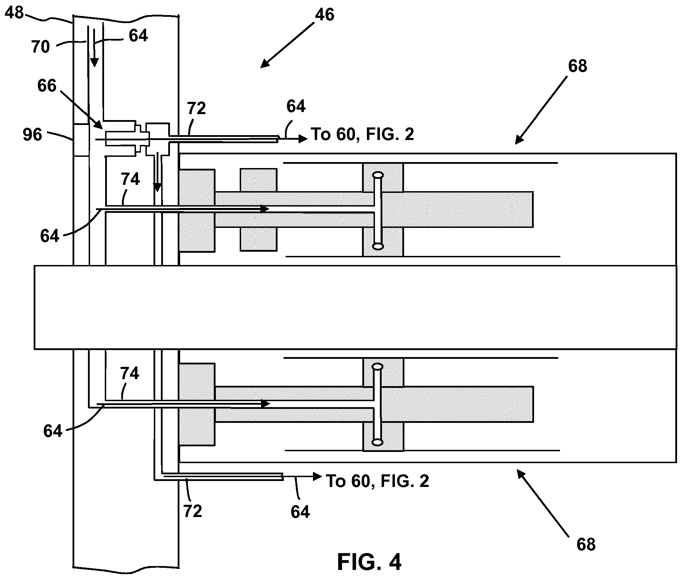

According to embodiments, an injector assembly 60 including a set of AFS fuel injectors 62 may be provided for injecting a supply of fuel 64 (with or without a carrier fluid such as air) into the secondary reaction zone 52. The fuel 64 is ignited by the hot gases 26 exiting the primary reaction zone 50, and the resulting combustion goes to completion in the transition duct 54. As detailed below with regard to FIGS. 3 and 4, the fuel 64 is selectively supplied to the injector assembly 60 based on the state of an auto-thermal valve 66.

The end cover assembly 48 may include various supply passages, manifolds, and associated valving (not shown in FIG. 2) for supplying fuel (e.g., fuel 64) to a plurality of fuel nozzles 68, which are configured to inject fuel and/or premixed air/fuel into the primary reaction zone 50 for combustion. Other fluids (e.g., air, water, oil, and/or the like) may also be supplied to the fuel nozzles 68 and/or other components of the combustion section 10 through the end cover assembly 48.

A partial enlarged cross-sectional view of the head end 46 of the combustor 11 of FIG. 2 is depicted in FIGS. 3 and 4, with continued reference to FIG. 2. As shown, a supply of fuel 64 flows into at least one fuel passage 70 formed in/through the end cover assembly 48. The fuel 64 is selectively directed to the AFS fuel injectors 62 of the injector assembly 60 through a set of fuel passages 72, depending upon the state (e.g., closed, open) of one or more auto-thermal valves 66 (only one in this example). The fuel 64 is also supplied via at least one fuel passage 74 to a set of fuel nozzles 68 in the head end 46 of the combustor 11. The fuel 64 flows through the fuel passage 70 to the set of fuel nozzles 68 via the fuel passages 74 independently of the state of the auto-thermal valve 66.

The fuel passages 72 fluidly couple the fuel passage 70 to the fuel injectors 62 of the injector assembly 60 through the auto-thermal valve 66. In the configuration shown in FIGS. 3 and 4, two fuel passages 72 are shown, however any number of fuel passages 72 may be utilized. In addition, a plurality of the auto-thermal valves 66 may be used, each controlling the flow of fuel 64 into one or more of the fuel passages 72.

The auto-thermal valve 66 includes a temperature set point, such that the auto-thermal valve 66 is closed at fuel temperatures below the temperature set point and open at fuel temperatures above the temperature set point. To this extent, the operation of the auto-thermal valve 66 is controlled by the temperature of the fuel 64 passing through the fuel passage 70 and past the auto-thermal valve 66. The temperature of the fuel 64, as detailed above, is controlled by the fuel control system 36. Thus, the fuel control system 36 indirectly controls the operation of the auto-thermal valve 66 through regulation of the temperature of the fuel 64.

As shown in FIG. 3, when the temperature of the fuel 64 is below the temperature set point of the auto-thermal valve 66 (e.g., below the intermediate fuel temperature set by the fuel control system 36 (FIG. 1)), the auto-thermal valve 66 is in a closed state and fuel 64 is prevented from flowing into the set of fuel passages 72. Fuel 64, therefore is not injected into the secondary reaction zone 52 via the fuel injectors 62 of the injector assembly 60. Thus, at partial load operation of the combustor 11, where the temperature of the fuel 64 (controlled by the fuel control system 36) is below the temperature set point of the auto-thermal valve 66, fuel 64 flows to the set of fuel nozzles 68 via the fuel passages 74, but does not flow to the AFS fuel injectors 62 of the injector assembly 60 through the set of fuel passages 72. As the operational load of the combustor 11 increases, the fuel control system 36 increases the temperature of the fuel 64 passing into and through the fuel passage 70 and over the auto-thermal valve 66. When the temperature of the fuel 64 increases above the temperature set point of the auto-thermal valve 66, the auto-thermal valve 66 begins to enter an open state in which at least some fuel 64 is allowed to flow through the fuel passages 72 to the fuel injectors 62 of the injector assembly 60. The auto-thermal valve 66 opens further as the temperature of the fuel 64 increases under control of the fuel control system 36 towards the target temperature set by the fuel control system 36. At the target temperature, the auto-thermal valve 66 is fully open, and a maximum flow of fuel 64 is supplied to the fuel injectors 62 of the injector assembly 60. Regardless of the state of the auto-thermal valve 66, however, the flow of fuel 64 through the fuel passages 74 to the set of fuel nozzles 68 is not interrupted.

It should be noted that the 'target' temperature at which the auto-thermal valve 66 is fully open may not necessarily correspond to the fuel temperature at base load operation. For example, according to embodiments, the auto-thermal valve 66 may be fully open at a fuel temperature below the fuel temperature at base load operation, so that all auto-thermal valves 66 in the system will be fully open after accounting for minor variations in valve manufacture.

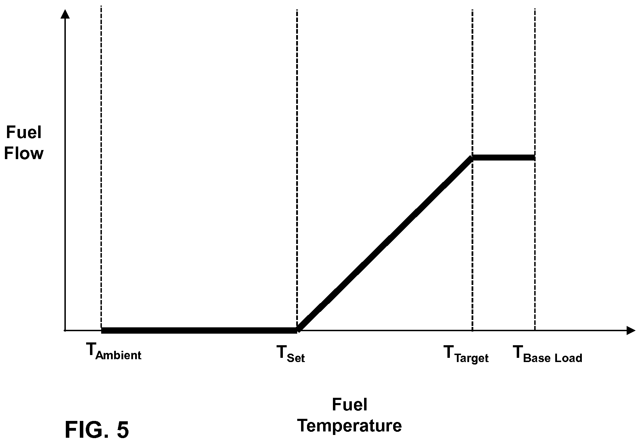

A chart of the behavior of the auto-thermal valve 66 is depicted in FIG. 5. Below the temperature set point T_{Set}, fuel 64 does not flow through the auto-thermal valve 66. As the temperature of fuel 64 increases above T_{Set}, fuel 64 begins to flow through the auto-thermal valve 66. The flow of fuel 64 through the auto-thermal valve 66 continues to increase as the temperature approaches the target temperature T_{Target}, at which point a maximum amount of fuel 64 passes through the auto-thermal valve 66. As noted above, the auto-thermal valve 66 may be fully open at a fuel temperature below the fuel temperature T_{Base Load} at base load operation.

A door 96 in the end cover assembly 48 provides access to the auto-thermal valve 66 (e.g., for installation, repair, and/or replacement of the auto-thermal valve 66). Although only one auto-thermal valve 66 is depicted, a plurality of auto-thermal valves 66 may be utilized. Each of the plurality of auto-thermal valve 66 may have the same or different temperature set points and target temperatures.

The fuel control system 36 (FIG. 1) monitors and regulates the temperature of the fuel 64 during the operation of the gas turbine system 4. Thus, the fuel control system 36 can 'turn on' the auto-thermal valve 66 by increasing the temperature of the fuel 64 above the temperature set point of the auto-thermal valve 66, and can 'turn off the auto-thermal valve 66 by reducing the temperature of the fuel 64 below the temperature set point of the auto-thermal valve 66.

The auto-thermal valve 66 is sensitive to the temperature of the fuel 64, and is passively actuated. In other words, no control connections and no sensor signals are required. For example, the auto-thermal valve 66 may be passively actuated via the expansion of a temperature-sensitive fluid coupled to a movable piston.

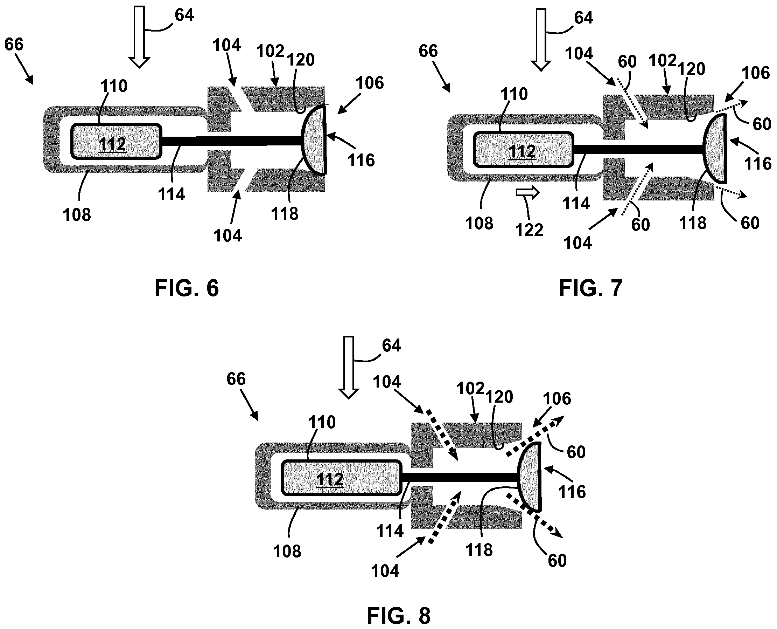

An auto-thermal valve 66 according to embodiments is depicted in FIGS. 6-8. Other suitable types of auto-thermal valves 66 can also be used. As shown, the auto-thermal valve 66 includes a valve section 102 including one or more fuel inlet ports 104 and a fuel outlet port 106. The auto-thermal valve 66 further includes a housing 108 enclosing a bellows or other expandable element 110 containing a thermally expandable material 112. The expandable element 110 is coupled to a rod 114. A valve disc 116 is coupled to a distal end of the rod 114. The thermally expandable material 112 may include, for example, a silicon heat transfer fluid, a thermal salt or oil, or any other suitable thermally expandable material capable of providing the functionality described herein.

The auto-thermal valve 66 is shown in a closed configuration in FIG. 6 (e.g., the temperature of the fuel 64 is below the temperature set point of the auto-thermal valve 66). In the closed configuration, a surface 118 of the valve disc 116 sealingly engages a complementary (e.g., conical) valve seat 120 formed adjacent the fuel outlet port 106. In general, the valve disc 116 and valve seat 120 may have any suitable configuration capable of forming a seal to prevent the flow of fuel 64 through the fluid outlet port 106. In the closed configuration, the flow of fuel 64 is prevented from flowing from the fuel inlet port(s) 104 through the fuel outlet port 106 into a downstream location.

An increase in the temperature of the fuel 64 causes an expansion of the thermally expandable material 112 within the expandable element 110. The enlargement of the expandable element 110 within the housing 108 (e.g., as indicated by arrow 122) forces the rod 114 and valve disc 116 away from the valve seat 120 and the fuel outlet port 106.

Above the temperature set point of the auto-thermal valve 66, the surface 118 of the valve disc 116 no longer forms a seal against the valve seat 120. This allows fuel 64 to flow from the fuel inlet ports 104 through the gas flow outlet port 106 (as indicated by the dashed arrows) into a downstream location. When the temperature of the fuel 64 reaches the target temperature, as shown in FIG. 8, the expandable element 110 is fully enlarged, allowing a maximum amount of fuel 64 to flow from the fuel inlet ports 104 through the gas flow outlet port 106.

The auto-thermal valve 66 is configured to open over a range of fuel temperatures. In this case, the auto-thermal valve 66 may begin to open at a first temperature and be fully open at a second, higher temperature.

Various thermally expandable materials 112 may be used in different auto-thermal valves 66 to provide different coefficients of thermal expansion. This provides, for example, different opening/closing temperature set points for different auto-thermal valves 66. Further, in general, any number of auto-thermal valves 66 may be used. In addition, although the auto-thermal valves 66 are shown as disposed in particular locations in the figures, these locations are for descriptive purposes only; other suitable locations may be available in a gas turbine system.

In other embodiments, a pressure-sensitive valve may be used in lieu of or in addition to one or more of the auto-thermal valves 66. In this case, when the fuel temperature is high enough to push the pressure drop across a fuel nozzle to a high enough level, the pressure-sensitive valve will open. Of course, actively controlled valves may also be used in lieu of or in addition to one or more of the auto-thermal valves 66.

Use of an auto-thermal valve enables the addition (e.g., retrofitting) of AFS fuel staging to a existing combustor without requiring a complete and expensive fuel circuit, including fuel manifold and control valve. The flow of fuel to the AFS fuel injectors is indirectly controlled, with a control 'signal' being passed to the auto-thermal valve via fuel temperature. The piping and/or tubing required to route fuel to the AFS fuel injectors, typically located on or near the transition duct, does not require much space and is limited to tubing between the AFS fuel injectors and the end cover assembly. This enables a manufacturer to offer an upgrade package with AFS with a very low cost, compared to today's technology. AFS using auto-thermal valve(s) will enable a significant improvement in gas turbine turndown (minimum load in emissions compliance). One reason for this is because the AFS air flow bypasses the combustor head end, but the auto-thermal valve enables all of the fuel to be routed to the head-end at low power conditions, increasing head-end temperature and enabling CO to be fully reacted before the flow leaves the combustor.

In various embodiments, components described as being "coupled" to one another can be joined along one or more interfaces. In some embodiments, these interfaces can include junctions between distinct components, and in other cases, these interfaces can include a solidly and/or integrally formed interconnection. That is, in some cases, components that are "coupled" to one another can be simultaneously formed to define a single continuous member. However, in other embodiments, these coupled components can be formed as separate members and be subsequently joined through known processes (e.g., fastening, ultrasonic welding, bonding).

When an element or layer is referred to as being "on", "engaged to", "connected to" or "coupled to" another element, it may be directly on, engaged, connected or coupled to the other element, or intervening elements may be present. In contrast, when an element is referred to as being "directly on," "directly engaged to", "directly connected to" or "directly coupled to" another element, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A combustor (11) for a gas turbine (20), comprising:
an axial fuel stage fuel injector (62); and
a passively-actuated valve (66) for selectively directing a supply of fuel (64) to the axial fuel stage fuel injector (62) based on a characteristic of the fuel (64); **characterized in that**:
the passively-actuated valve (66) comprises a thermally-actuated valve, and the characteristic of the fuel (64) comprises a temperature of the fuel (64).

2. The combustor (11) according to claim 1, wherein the passively-actuated valve (66) is located within an end cover assembly (48) of the combustor (11).

3. The combustor (11) according to claim 2, further comprising a door (96) in the end cover assembly (48) of the combustor (11) for accessing the passively-actuated valve (66).

4. The combustor (11) according to claim 1, wherein the thermally-actuated valve (66) is in a first state when the temperature of the fuel (64) is below a temperature set point, and wherein the thermally-actuated valve (66) is in a second state when the temperature of the fuel (64) is above the temperature set point.

5. The combustor (11) according to claim 4, wherein in the first state the thermally-actuated valve (66) is closed, and wherein in the second state the thermally-actuated valve (66) is open.

6. The combustor (11) according to claim 5, wherein the thermally-actuated valve (66) begins to open at the temperature set point, and wherein the thermally-actuated valve (66) is fully open at a target temperature above the temperature set point.

7. The combustor (11) according to claim 5 or 6, further comprising a primary reaction zone (50) and a secondary reaction zone (52) downstream from the primary reaction zone (50), and wherein the axial fuel stage fuel injector (62) injects fuel (64) into the secondary reaction zone (52) of the combustor (11) when the thermally-actuated valve (66) is open.

8. A turbine system, comprising:
a compressor;
a combustor as claimed in claim 1; and
a turbine.

9. A method, comprising:
controlling a temperature of fuel in a combustor (11) of a gas turbine (20); and
actuating a passive, thermally-actuated valve (66) in the combustor, based on the temperature of the fuel, to inject fuel into an axial fuel stage of the combustor.

## Patentansprüche

1. Brennkammer (11) für eine Gasturbine (20), umfassend:
eine Brennstoffeinspritzvorrichtung für eine axiale Brennstoffstufe (62); und
ein passiv betätigtes Ventil (66) zum selektiven Leiten einer Brennstoffzufuhr (64) zu der Brennstoffeinspritzvorrichtung für eine axiale Brennstoffstufe (62), basierend auf einer Eigenschaft des Brennstoffs (64); **dadurch gekennzeichnet, dass:**
das passiv betätigte Ventil (66) ein thermisch betätigtes Ventil umfasst, und die Eigenschaft des Brennstoffs (64) eine Temperatur des Brennstoffs (64) umfasst.

2. Brennkammer (11) nach Anspruch 1, wobei das passiv betätigte Ventil (66) innerhalb einer Endabdeckungsanordnung (48) der Brennkammer (11) angeordnet ist.

3. Brennkammer (11) nach Anspruch 2, ferner umfassend eine Tür (96) in der Endabdeckungsanordnung (48) der Brennkammer (11) zum Zugreifen auf das passiv betätigte Ventil (66).

4. Brennkammer (11) nach Anspruch 1, wobei sich das thermisch betätigte Ventil (66) in einem ersten Zustand befindet, wenn die Temperatur des Brennstoffs (64) unter einem Temperatursollwert liegt, und wobei sich das thermisch betätigte Ventil (66) in einem zweiten Zustand befindet, wenn die Temperatur des Brennstoffs (64) über dem Temperatursollwert liegt.

5. Brennkammer (11) nach Anspruch 4, wobei das thermisch betätigte Ventil (66) in dem ersten Zustand geschlossen ist, und wobei das thermisch betätigte Ventil (66) in dem zweiten Zustand offen ist.

6. Brennkammer (11) nach Anspruch 5, wobei das thermisch betätigte Ventil (66) sich bei dem Temperatursollwert zu öffnen beginnt, und wobei das thermisch betätigte Ventil (66) bei einer Zieltemperatur oberhalb des Temperatursollwerts vollständig geöffnet ist.

7. Brennkammer (11) nach Anspruch 5 oder 6, ferner umfassend eine primäre Reaktionszone (50) und eine sekundäre Reaktionszone (52) stromabwärts der primären Reaktionszone (50), und wobei die Brennstoffeinspritzvorrichtung für eine axiale Brennstoffstufe (62) Brennstoff (64) in die sekundäre Reaktionszone (52) der Brennkammer (11) einspritzt, wenn das thermisch betätigte Ventil (66) offen ist.

8. Turbinensystem, umfassend:
einen Verdichter;
eine Brennkammer nach Anspruch 1; und
eine Turbine.

9. Verfahren, umfassend:
Steuern einer Temperatur eines Brennstoffs in einer Brennkammer (11) einer Gasturbine (20); und
Betätigen eines passiven, thermisch betätigten Ventils (66) in der Brennkammer basierend auf der Temperatur des Brennstoffs, um Brennstoff in eine axiale Brennstoffstufe der Brennkammer einzuspritzen.

## Revendications

1. Chambre de combustion (11) destinée à une turbine à gaz (20), comprenant :
un injecteur de carburant d'étage de carburant axial (62) ; et
une soupape actionnée passivement (66) pour diriger sélectivement une alimentation en carburant (64) vers l'injecteur de carburant d'étage de carburant axial (62) sur la base d'une caractéristique du carburant (64) ; **caractérisée en ce que** :
la soupape actionnée passivement (66) comprend une soupape actionnée thermiquement, et la caractéristique du carburant (64) comprend une température du carburant (64).

2. Chambre de combustion (11) selon la revendication 1, dans laquelle la soupape actionnée passivement (66) est située à l'intérieur d'un ensemble de couvercle d'extrémité (48) de la chambre de combustion (11).

3. Chambre de combustion (11) selon la revendication 2, comprenant en outre une porte (96) dans l'ensemble de couvercle d'extrémité (48) de la chambre de combustion (11) pour accéder à la soupape actionnée passivement (66).

4. Chambre de combustion (11) selon la revendication 1, dans laquelle la soupape actionnée thermiquement (66) est dans un premier état lorsque la température du carburant (64) est inférieure à une température de consigne, et dans laquelle la soupape actionnée thermiquement (66) est dans un second état lorsque la température du carburant (64) est supérieure à la température de consigne.

5. Chambre de combustion (11) selon la revendication 4, dans laquelle dans le premier état la soupape actionnée thermiquement (66) est fermée, et dans laquelle dans le second état la soupape actionnée thermiquement (66) est ouverte.

6. Chambre de combustion (11) selon la revendication 5, dans laquelle la soupape actionnée thermiquement (66) commence à s'ouvrir au point de consigne de température, et dans laquelle la soupape actionnée thermiquement (66) est complètement ouverte à une température cible supérieure à la température de consigne.

7. Chambre de combustion (11) selon la revendication 5 ou 6, comprenant en outre une zone de réaction primaire (50) et une zone de réaction secondaire (52) en aval de la zone de réaction primaire (50), et dans laquelle l'injecteur de carburant d'étage de carburant axial (62) injecte du carburant (64) dans la zone de réaction secondaire (52) de la chambre de combustion (11) lorsque la soupape actionnée thermiquement (66) est ouverte.

8. Système de turbine, comprenant :
un compresseur ;
une chambre de combustion selon la revendication 1 ; et
une turbine.

9. Procédé, comprenant :
le contrôle d'une température de carburant dans une chambre de combustion (11) d'une turbine à gaz (20) ; et
l'actionnement d'une soupape passive, actionnée thermiquement (66) dans la chambre de combustion, sur la base de la température du carburant, pour injecter du carburant dans un étage de carburant axial de la chambre de combustion.
